Europäisches Patentamt

(19) European Patent Office

Office européen des brevets

(11) Publication number: **0 395 384**
**A2**

## (12) EUROPEAN PATENT APPLICATION

(21) Application number: **90304461.8**

(22) Date of filing: **25.04.90**

(51) Int. Cl.5: **G01N 33/48, G01N 35/00**

(30) Priority: **25.04.89 US 342972**

(43) Date of publication of application:
**31.10.90 Bulletin 90/44**

(84) Designated Contracting States:
**AT BE CH DE DK ES FR GB GR IT LI LU NL SE**

(71) Applicant: **Biotrack, Inc.**
**1058 Huff Avenue**
**Mountain View California 94043(US)**

(72) Inventor: **Allen, Jimmy D.**
**1070 Rosemont Avenue**
**Los Altos, California 94022(US)**

(74) Representative: **Harrison, David Christopher**
**et al**
**MEWBURN ELLIS 2 Cursitor Street**
**London EC4A 1BQ(GB)**

(54) **System and method for modifying output of an analytical instrument.**

(57) A system for customizing the output of a clinical analysis instrument is disclosed, in which unique codes contained on a cartridge insertable into the analytical cartridge location of the instrument (or a different location in some embodiments) are utilized for customization, for example, to establish the language in which the prompts will be presented to the user or the units of measurement which will be displayed.

EP 0 395 384 A2

# SYSTEM AND METHOD FOR MODIFYING OUTPUT OF AN ANALYTICAL INSTRUMENT

This invention relates to analytical instruments into which devices, such as cuvettes and test strips, are inserted for reading.

In the development of the diagnostics field, there has been explosive growth in the number of substances to be determined. For the most part, the medical field has looked to clinical laboratories for these determinations. The clinical laboratories have been dependent upon expensive, sophisticated equipment and highly trained technical help to fulfill the manifold needs of the medical community. However, in a highly automated clinical laboratory, there is substantial need to perform one or a few assays on a stat basis with minimum equipment.

There is also an expanding need for having analytical capabilities in "distributed sites" such as doctors' offices, emergency rooms, and in the home. The key is a need for test results which can be obtained objectively, quickly, preferably while the patient is still present, and in a convenient, failsafe form so that skill is not a requirement for running a test and obtaining the test results. There is a continuing need to monitor the level of drug administered to people with chronic illnesses, such as diabetics, asthmatics, epileptics, and cardiac patients, as it appears in a physiological fluid, such as blood. Tests of interest include prothrombin time, potassium ion, and cholesterol. Determining red-blood-cell count is also a common test. In the case of diabetic patients, it is necessary to determine sugar level in urine or blood.

Numerous approaches have been developed toward this end, depending to varying degrees on instrumental or visual observation of the result. Typical of these are the so called "dip-stick" methods. These methods typically employ a plastic strip with a reagent-containing matrix layered thereon. Sample is applied to the strip and the presence or absence of an analyte is indicated by a color-forming reaction. While such devices have proven useful for the qualitative determination of the presence of analytes in urine and can even be used for rough quantitative analysis, they are not particularly useful with whole blood because of the interfering effects of red blood cells, nor are they useful for making fine quantitative distinctions. Instruments are available into which such strips (often modified from the form used in dip-stick methods) can be inserted and quantified by reflectance or absorbance readings.

U.S. Patent No. 4,756,884, issued to Hillman et. al. and assigned to Biotrack Corporation, the assignee of this application, teaches various embodiments of fabricating devices including a defined chamber or channel, the resulting devices, and techniques for use of such device in analyzing a fluid such as blood for the pressure of a number of different analytes. By "analyte" is meant either a chemical component of the sample or a physical or chemical (biochemical) property of the sample that is being detected or measured. Examples of chemical analytes include electrolytes such as sodium and potassium; drugs, such as dilantin and heparin; and biochemical components, such as cholesterol and enzymes. Examples of properties that can be analyzed include blood clotting and sample viscosity.

A device within the scope of this patent suitable for use in measuring prothrombin time (PT) has been commercially produced under the name Protime. The monitor into which the Protime cartridge is inserted for analysis utilizes a light source, such as a laser, for providing light to the blood sample and reads transmitted light in order to determine when blood flow has ceased, i.e, when the endpoint of the prothrombin reaction has been reached and blood ceases to flow through the capillary due to clot formation. The Protime monitor uses a fixed threshold voltage for comparing a voltage related to the the optical signal, in order to detect the endpoint of the prothrombin assay. The commercial prothrombin time cartridge has now been modified for use in an APTT assay. This new cartridge is described in co-pending application Serial No. 90304300.8, filed April 20, 1990.

Co-pending patent applications assigned to the same assignee as the present application disclosing devices with non-capillary cuvette chambers include EP-A-305210 and USSN 117,701, filed November 5, 1987. These last two applications are directed to devices suitable for carrying out analyses that require dilution and mixing of samples.

It is often desirable or necessary to customize the performance or output of an instrument (in which analytical results are being obtained) for a specific installation. For example, for an instrument that will be sold in several countries with different languages, it is necessary to provide the user language for any user prompts, error messages, and results output. This is particularly true for a medical instrument where a prompt or output that cannot be readily understood can lead to an improper medical action. Different countries also employ varying measurement units in reporting medical test results. Unless the result format is customized, the result might be in unaccustomed units that could lead to confusion or even incorrect medical action.

Instrument customization can be performed by the manufacturer; however, this requires that the manufacturer maintain several instruments in inventory that are identical except for the customization. This is costly and inefficient for the manufacturer. This approach also precludes the user from later customization, should that be desirable.

Another method of customization that has been employed in the prior art uses mechanical switches on the instrument. If these switches are set by a service technician, a service call is required for customization. If these switches are set by the customer, it requires that the customer understand the purpose and interactions of the various switches. A non-technical customer may find the setting of switches difficult or even impossible to perform. A lack of user understanding can lead to errors in the settings and, consequently, erroneous output.

An alternative method of customization is through an interactive menu where the user or a factory technician goes through a setup menu making selections among various options. Although typically easier than setting switches, this approach is still imperfect. It requires a technician visit with customer interaction for the setup, or else the customer is required to perform other complex selections without a full understanding of the ramifications. If the customer makes mistakes in this setup, unpredictable results may occur. The menu setup approach also has the disadvantage that if power is lost the setup can be lost and will have to be repeated.

It is also commonly necessary to check the performance of or to calibrate an instrument, particularly an instrument employed in medical practice. This check is often through the use of an external device that is inserted into the instrument. For example, U.S. Patent 4,756,884 discloses the use of an electronic control device that is inserted into the device to confirm the correct performance of the system. Such electronic controls are usually run frequently. Often, the electronic control device also contains a code, either mechanical, optical (such as a bar code), or magnetic which, for example, indicates certain calibration or instrument set up information. An instrument which reads this code from the electronic control device is also capable of reading a code from the device containing analyte being read by the instrument, indicating lot-to-lot variations of cartridges, including variations in optical characteristics and/or variations in reagents contained within the cartridge and to identify the test type.

However, all of these prior instruments use the previously know techniques for customization, with associated undesirable features as discussed above.

Accordingly, the present invention provides a monitor customizing system, comprising an analytical instrument that provides a message to a user of the instrument, detector means in the instrument for detecting the presence of an analyte present in or property of a sample, an analytical cartridge comprising means for retaining a sample for analysis, registration means in the analytical instrument for holding the analytical cartridge in registration with the detector means, and a plurality of customizing cartridges, each of the customizing cartridges being of a predetermined class and comprising a cartridge capable of being held in the instrument by the registration means, wherein each class of customizing cartridge is encoded with a different signal and the analytical instrument comprises means for detecting the signal and means for customizing the instrument in response to the signal, wherein the means for customizing causes the instrument to provide the message in one of a plurality of predetermined formats in response to the signal provided by the class of customizing cartridge. Some variations on this basic system are also provided. The invention also provides a number of individual components for use in the system, including individual customizing cartridges and kits, and a method by which the invention is practiced. A number of advantages are provided by the preferred embodiment of using a signal detector in the location where the analytical cartridge is inserted, as will be apparant from the following detailed description given with reference to the accompanying drawings, in which:

Figure 1 is a diagram depicting a relationship between signal level and threshold voltage during an assay;

Figure 2 is a graph depicting the signal level from the sample well during the performance of an assay;

Figure 3 is a flow chart depicting one embodiment of an algorithm used to adjust the threshold voltage, as depicted in Figure 1; and

Figure 4 is a flow chart depicting one embodiment of a thermal model used to maintain cartridge temperature at a desired level.

The present invention provides a monitor customizing system which allows an analytical instrument to provide a message to a user of the instrument in a number of different formats. For example, a number of instruments are currently provided with liquid crystal displays that provide visual prompt and error messages to users. The present invention allows the language in which the messages are presented to be selected by the user merely by temporarily inserting a customizing cartridge, described further below, into the analytical instrument, normally into the location on the analytical instrument that is normally used to detect the presence of an analyte in or a property of a sample being analyzed. Such a system greatly reduces the number of instruments that must be manufactured and retained in stock by the manufacturer of the instrument and/or the complexity of manufacturing and/or on-site set up procedures.

The present invention can be practiced in any analytical instrument including those currently available with only slight modification. The principal requirements of the instrument are that the instrument accept a sample holder, here referred to as an analytical cartridge, and that the instrument be modified to detect a signal provided by the analytical cartridge or by a different cartridge, all of which are collectively referred to as customizing cartridges, which is insertable into the same location as the analytical cartridge (or in less preferred embodiments a different location) and which contains a signal that is used to customize the instrument output. The various components of the system will be more readily understood by reference to the following detailed description of the individual components, after which the mode of operation will be discussed.

The customizing system of the present invention does not rely on a particular type of analytical instrument, analytical cartridge, or analysis. Accordingly, these aspects of the system can vary widely and include all known systems or systems that are later developed in which an analytical cartridge is inserted into an instrument for the purpose of carrying out an analytical measurement on a sample retained on or in the analytical cartridge. For example, the analytical cartridge can be a reagent strip comprising a handle and a porous matrix containing reagents. When a sample is applied to the matrix, a reaction occurs indicating the presence (or absence) of an analyte. Such a strip can be inserted into a reflectance spectrophotometer for determining the amount of analyte as indicated by a color reaction taking place in the matrix. Similarly, a transmission spectrophotometer can be used if the matrix is transparent or translucent. In such instruments, the location in which the analytical cartridge is inserted is designed to specifically hold the cartridge in registration with a detector, light source, or other part of the instrument involved in detecting the presence of the analyte. Other types of analytical cartridges include devices with internal chambers (generally referred to as cuvettes) in which spectrophotometric measurements are made, as well as the devices described in the various patents and patent applications referenced above. In addition to spectrophotometers, other types of analytical instruments include nuclear magnetic resonators, radiation counters, densitometers, and instruments capable of thermal measurements.

A key aspect of the present invention is the provision of a plurality of customizing cartridges, each of which is capable of being held temporarily in the analytical instrument, preferably by the same technique and part of the device used to hold the analytical cartridge. Each customizing cartridge belongs to a predetermined class, and each member of the class is encoded with the same signal, different signals being provided for different classes of customizing cartridge. A signal can comprise any property of matter or energy that is detectable by the instrument into which the customizing cartridge is inserted. Examples include bar codes (with corresponding bar-code readers in the instrument), other optical signal techniques, such as transparent and opaque (or reflective and non-reflective) locations on the customizing cartridge with corresponding light sources and detectors in the instrument, magnetic strips with magnetic readers in the instrument, differences in shape, such as provision of depressions or raised portions on a surface of the cartridge with corresponding switches or other means of detecting shape differences located in the instrument, and the like. Such signal and detecting means are well known, although they have not previously been used to achieve the current purpose.

In addition to providing for detection of the signal when the cartridge is inserted into the instrument, the analytical instrument also comprises some technique for customizing the instrument in response to the signal. In particular, customizing causes the instrument to provide a message to the user of the instrument in one of a plurality of formats in response to the signal provided by the class of customizing cartridge that is inserted into the instrument. For example, a customizing cartridge can be used that causes the instrument to display messages in English or in French or in some other language. Prompts of this type are often used in medical instruments, for example to tell the user to add a sample to the reagent cartridge or perform some other action. The message can also be the result of the analytical measurement or can be an error or other type of data message. Additionally, measurement units in which the results are displayed can be changed under the control of the customizing cartridge.

The message to the user can be provided in any detectable form, such as a visual display (typically using liquid crystal displays) or an audible message or code. Any other means of giving information to the user can also be provided in place of a visual or audible message.

The customizing cartridge can be the actual analytical cartridge normally used in the device but provided with a signal. For example, a paper strip containing a bar code or a magnetic strip can be affixed to a normal analytical cartridge and used to provide the signal to the instrument. Alternatively, a customizing cartridge can be provided that performs no function in the instrument other than the actual act of customizing the instrument. The cartridge in this case could be a dummy cartridge shaped to fit the same receptacle in the instrument as the analytical cartridge. Still further, it is possible to provide any of a number of control cartridges that are normally used to determine proper functioning of the instrument. By providing a signal on the control cartridge, the control cartridge is converted to a customizing cartridge of the present invention. A number of individual analytical and control cartridges that can be used as customizing cartridges of the present invention when provided with a signal are described below.

The components of the present system can be provided individually by different manufacturers. . For example, an analytical instrument capable of carrying out an analytical reading on a sample and of detecting the signal can be prepared by one manufacturer while a second manufacturer prepares individual customizing cartridges. The customizing cartridges can be provided individually, or they can be provided in kits comprising more than one customizing cartridge. For example, instruments shipped to Switzerland could be provided with a Swiss kit containing customizing cartridges that would provided user messages in French, German, and Italian, the three official languages of Switzerland. In the United States, customizing kits containing English and Spanish customizing cartridges could be provided for sale in areas with large Hispanic populations.

The method of customizing the instrument, when practiced with the system as described above, is very simple and straight forward. The user of the instrument merely inserts a customizing cartridge into the appropriate location on the instrument, usually the same location on the instrument into which an analytical cartridge would normally be inserted. The signal provided by the customizing cartridge automatically customizes the instrument, as discussed above. If the customizing cartridge is a signal-encoded analytical cartridge, the instrument is customized every time an analytical cartridge is inserted into the instrument. Such a system is highly desirable in that it always provides language prompts and messages in the language of the user. Since a preferred embodiment of the invention is to provide the system for use with an instrument that uses disposable analytical cartridges, the disposable cartridges can be provided in packets written in the langauge of the user so that the user automatically selects an analytical cartridge (and therefore a customizing cartridge) that provides the desired messages in the correct language. Such a situation is particularly useful in a multi-language environment where the instrument is being used by different individuals with different language skills.

Other advantages are provided by having the signal on a control cartridge or on a separate customizing cartridge that performs no other function. Costs of manufacturing are reduced by these techniques while still providing an extremely simple technique for customizing the instrument to the individual user.

Although the primary intent is to provide a customizing cartridge that in insertable into the same location on the instrument as that used for the analytical cartridge, it is also feasible to provide a customizing cartridge that is temporarily inserted into a different location of the instrument. By temporarily is meant for no more than the time between two analyses, when the customizing cartridge is not an analytical cartridge. When the customizing cartridge is an analytical cartridge, the cartridge is retained in the instrument for the time required to carry out an analysis. The customizing cartridge, in the embodiment of a separate customizing cartridge location to hold the cartridge in registration with the signal detecting means, is not normally present in the instrument when an analysis is being carried out. For example, a magnetic strip of the type commonly found on credit cards can be used to customize an instrument by quickly passing a card on which the strip has been placed through a magnetic strip reader. This operation would be carried out between analyses. Other types of signal, such as those exemplified above, can also be used.

A number of types of individual cartridges are now described for the purpose of illustrating the present invention. It will be apparent to one of ordinary skill in the art that considerable modification of these exemplary types of cartridges is possible.

In all embodiment of this invention, an insertable customizing cartridge, which can be the analytical cartridge itself, the quality check device, or an entirely separate cartridge prepared solely for this purpose, is used to automatically customize the instrument. This approach has several advantages. The manufacturer has only to stock various customization cartridges, which are typically much less expensive than the instrument. A technician visit is not required in order to set the options. The setup is transparent to the user; the customer does not have to read any complicated instructions nor sort through a set of menus. Even if the batteries fail the setup is re-established when the customer re-inserts the customization cartridge. If the customization cartridge is the quality check device, customization will be re-established each time the customer runs the check device, which, regardless of its use in customization, must be run often as a quality control measure.

In the prior art, individual light transmission means were used to couple light between eight emitter/detector pairs and eight bits of optical code on the analytical cartridges of the type described in U.S. Patent No. 4,756,884 to indicate lot-to-lot variances in cartridge reagent qualities and proper cartridge type (e.g., in the Protime monitor discussed above). In accordance with the teachings of the present invention, one embodiment of the monitor includes 16 detectors for reading 16 bits of optical data on any type of insertable cartridge, using a single light source and, for example, a prism or light pipe for coupling light from the source to the cartridge. The use of 16 bits allows error detection or correction codes to be used, such as a Hamming code, in order to prevent errors due to erroneous readings of the optical codes. Furthermore, in one embodiment, this optical code is used on the electronic control device to set the customization features. In one embodiment, there are six electronic control devices coded differently to customize the language displayed by the instrument. The manufacturing cost of the electronic control device is less than one tenth that of the instrument, making it much more cost effective to inventory six different electronic control devices rather than to inventory six different instruments. In addition, if the customer requires prompts in two different languages, as in Canada where French and English are both official languages, he has only to order two different electronic control devices in order to customize his instrument as needed.

In an alternative embodiment of this invention, the code on the analytical cartridges themselves are used both to customize the instrument during a particular sample analysis as well as to indicate lot-to-lot variations among the cartridges.

The types of analytical and control cartridges that can be used in the practice of the present invention vary widely. Particularly preferred cartridge types are disclosed in detail in the patents and patent applications cited in the Background of the Invention section of this specification, all of which are incorporated by reference into this specification. In addition to those aspects of the various cartridges that are relevant to the present invention, the cartridges and instruments used in the practice of the present invention will provide a number of additional preferred aspects not specifically relevant to the present invention but which can be present on embodiments of the present invention. A number of these variations on cartridges and instruments are discussed below.

As described in U.S. Patent No. 4,756,884, by illuminating the blood sample, the measurement of light, e.g. scatter, can be used to measure a change in the rate of flow of blood, as in a capillary track. Unclotted blood, while flowing, provides an electrical signal which appears to be broadband noise, while with decreased flow rate, as blood begins to clot, the spectrum of this noise collapses to lower and lower frequencies. In performing the prothrombin time assay, a high-pass filter with cutoff at approximately 100 Hz is used to detect when the spectrum has sufficiently collapsed to indicate prothrombin endpoint.

Activated partial thromboplastin time (APTT) is determined utilizing a cartridge having a longer capillary length (in one embodiment approximately three times as long) than the path length used in a cartride for determining prothrombin time. In one embodiment of this invention, capillary path length in the APTT cartridge is within the range of approximately 18 to 31 centimeters. It has been empirically determined by the inventors that utilizing a bandpass filter centered at approximately 45 Hz provides the best analysis of the scattered light for detecting the endpoint of the APTT assay. In one embodiment, this 45 Hz bandpass filter has a 3 dB bandwidth of approximately 35 Hz. As is appreciated by those of ordinary skill in the art, the 100 Hz highpass filter and the 45 Hz bandpass filter can be achieved using either hardware elements, or software control, or a combination of both.

In accordance with the teachings of the prior art, a fixed threshold voltage was used for comparison with the output signal from the high-pass filter used in the prothrombin time assay or the bandpass filter used for the APTT assay. It is also possible to use a floating threshold voltage (typically approximately 0.5 volts very shortly after the assay is begun, although this value will vary by perhaps a factor of 2 or 3, depending on the signal level from the sample) is utilized in order to detect not merely the crossing of a fixed threshold voltage, but rather a pronounced and sustained crossing of a variable threshold voltage.

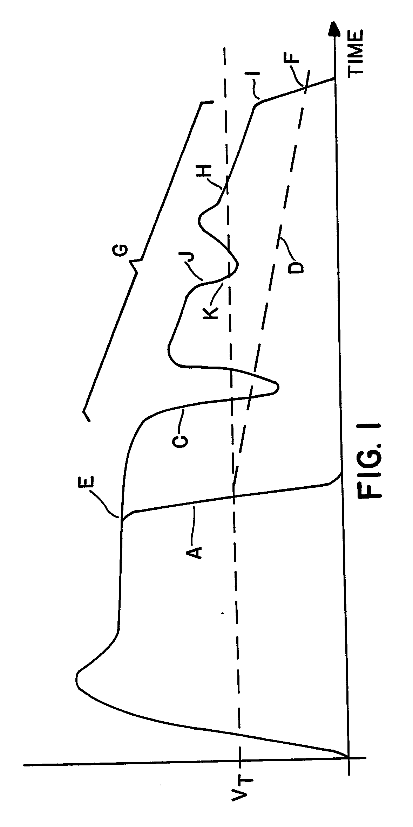

As shown in the graph of Figure 1, an ideal response curve A is shown, with signal fairly constant until knee E is reached at the endpoint. Utilizing a fixed threshold voltage $V_t$, E is easily detected as curve A decreases below threshold voltage $V_t$. However, with assays that require a longer period of time, such as the APTT assay, the signal gradually tapers off (as shown by curve G) as the flow rate slows down with increases in the capillary path length in the cartridge. Utilizing a fixed threshold voltage may result in erroneously calling the endpoint at point H rather than at the correct point F. Also, it can happen that the signal includes an undesired dip C or variation J caused by a temporary obstruction, for example, caused by partial clotting, which temporarily decreases capillary flow, following which capillary flow is increased. Utilizing a fixed threshold voltage $V_t$

causes an erroneous reading due to undesired dip C or variation J.

Problems associated with a fixed threshold voltage are overcome by using a variable threshold voltage (curve D) which starts off at threshold voltage $V_t$, and is subsequently reduced in order to track the gradual decrease in signal level (curve G). In one of the embodiments, the signal at the start of an assay is relatively low, but quickly builds up to a maximum value, and then tapers off over time, as shown in the plot of Figure 1. In another embodiment, false triggering is avoided by waiting a predetermined period of time before comparing the signal with the threshold voltage. Another embodiment, the floating threshold voltage, is initialized to a rather low value, thereby assuring that the endpoint will not be falsely triggered at the beginning of the assay, due to the relatively low signal level. The threshold voltage is then made to track the input signal level, and thus rises rather quickly at the beginning of the assay, as shown in Fig. 1. Since floating threshold voltage curve D remains below signal curve G by a sufficient amount, undesired variation J, which dips below a fixed threshold $V_t$ at point K, does not trigger an endpoint indication. However, since the true endpoint, which occurs at knee I, causes a very significant decrease in signal curve G, the true endpoint is indicated at point F, where signal curve G falls below floating threshold voltage curve D.

False indications of endpoint due to dip C are avoided by testing to determine whether the signal curve G has fallen below floating threshold voltage curve D for a minimum period of time, in one embodiment 10 seconds. Although one embodiment has been described which utilizes software to control the level of the floating threshold voltage, the floating threshold voltage can also be controlled in a similar manner utilizing hardware elements.

As previously described, endpoint detection is determined when capillary flow of blood being tested ceases, presumably due to clotting, as desired. In order to determine that a proper endpoint has been reached, i.e that fluid flow has ceased due to clotting, it must be determined that there remains adequate fluid blood in the sample reservoir, i.e. that fluid flow has not ceased due to depletion of blood in the sample reservoir. In order to determine if adequate blood remains in the sample reservoir, another optical source is utilized to provide light to the sample well, and a corresponding detector is used to measure the amount of light scattered from the sample well.

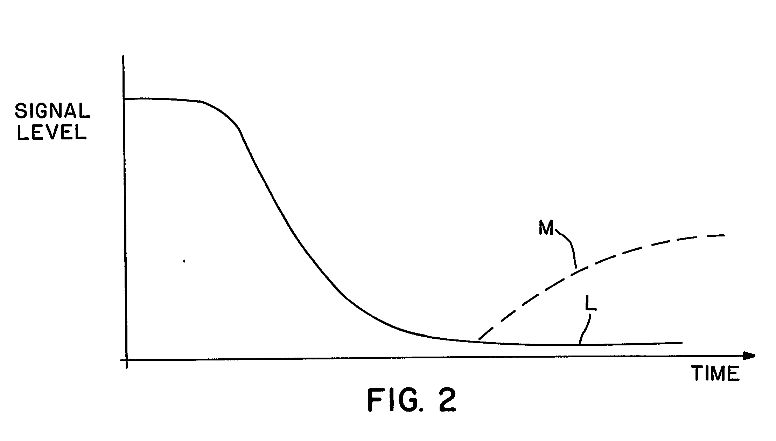

Figure 2 is a graph depicting the signal level from the sample well detector with respect to time, indicating a decrease in the amount of blood in the sample well. Curve L shows the ideal curve wherein the signal level decreases to a point near zero indicating that the sample well is empty, i.e that insufficient blood was present to allow capillary flow until capillary flow ceased due to clotting. In the prior art, when performing prothrombin assays, the assay was run until capillary flow ceased, and then a determination was made as to whether there was sufficient blood remaining in the sample well to indicate that flow ceased due to clotting, rather than due to lack of sample. No problems caused by sample drying were encountered, since the assay is complete in about 10 to 60 seconds.

However, for longer assays, such as APTT assays, there is a potential problem with the blood in the sample well drying, providing a false indication of blood remaining in the sample well at the time capillary flow ceases, thereby giving a false indication that the true endpoint has been reached. Curve M shows the undesired signal curve resulting from dried blood, i.e. over time it dries and provides increased signal which can be confused with blood remaining in the sample well.

Accordingly, the signal curve L can be monitored periodically rather than simply interrogated when capillary flow ceases, in order to detect if the sample well fails to contain sufficient blood to complete the assay. In one embodiment of this invention, with an APTT assay requiring up to approximately 260 seconds, the presence of blood in the sample well is periodically detected by monitoring curve L at intervals of approximately 2 seconds. If, at any one of these interrogations of the sample well, it is determined that the sample well has run out of blood, the test is aborted. If desired, the user then performs a new test, performed hopefully with sufficient blood to reach a true endpoint due to clotting, rather than a lack of blood in the sample well.

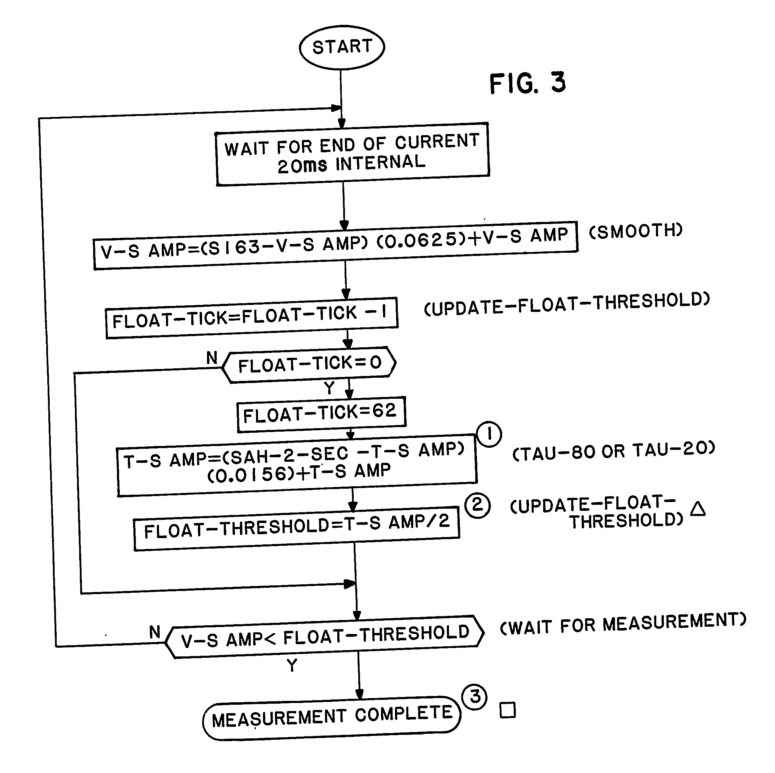

Figure 3 is a flow chart depicting the operation of one embodiment which is further described in the software code of Appendix 1 of copending U.S. patent application Serial No.      filed on April 20, 1989, on an invention of Lingane et al. entitled "Capillary Flow Device and Reading Instrument" and bearing attorney docket number BIOT-23. Notes pertaining to the flowchart of Figure 3 are as follows:

1. Multiplier changes from 0.0625 to 0.0156 after 40 seconds and variable SAH__2__SEC is copied from V__SAMP in interrupt service routine once every two seconds.

2. Firmware sets minimum value of FLOAT THRESHOLD to 100 millivolts

3. Firmware requires V__SAMPLE to be less than FLOAT THRESHOLD for 10 seconds before terminating measurement.

In prior art systems, modulated light was utilized in order to distinguish light emitted from the sample well (which lies outside of the instrument) from ambient light, which, of course, is uncontrollable in intensity and amplitude during the assay. As described in U.S. Patent No. 4,756,884 an oscillator circuit is utilized to modulate the emitted light such that detected light including this modulation can be electronically separated from ambient light. In accordance with one embodiment, the need for such an oscillator is obviated and emitted light is not modulated, but rather pulsed, for example, with a pulse width of approximately 400 microseconds and a pulse repetition rate of approximately 1 pulse every 2 seconds. Since the pulse includes relatively fast rise and fall times (typically 7$\mu$sec) the pulse is rich in frequencies other than those contained in ambient light which typically includes frequencies of either 50 or 60 Hz and harmonics. In one variation of this embodiment, the receiving circuitry is tuned to detect received light of approximately 8 kilohertz, as described in the aforementioned U.S. Patent No. 4,756,884 even though the emitted light is not modulated at 8 kilohertz, but rather consists of a series of pulses. Alternatively, light which is amplitude, frequency, or phase modulated, is used.

In one embodiment, a test is made to determine if excessive ambient light is present, which might cause an error in reading the optical code. This is accomplished by measuring light with the emitter turned off, and determining the level of ambient light. If the level of ambient light is excessive, an error message is displayed.

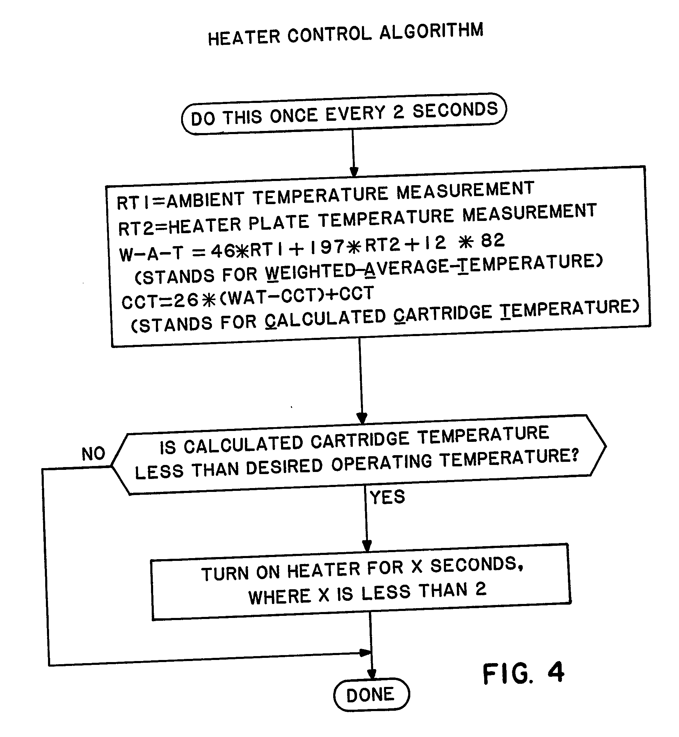

In one embodiment, rather than relying on heating a relatively massive platen in an attempt to maintain the cartridge temperature, as was done in the prior art, a thermal model is used to more accurately control the temperature of the cartridge and hence the sample and reagent contained therein. In accordance with one embodiment, a thermal model is used as depicted in the flowchart of Figure 4 and the associated source code shown in Appendix 2 of the aforementioned copending application of Lingane et al. As shown in Figure 4, RT1 and RT2 are numbers representing analog to digital converter counts, with each analog to digital converter count representing 20 millivolts. As depicted in Figure 4, W_A_T is the Weighted Average Temperature and C_C_T is the Calculated Cartridge Temperature. Utilizing this thermal model, the temperature within the cartridge is calculated based on the ambient temperature (preferably inside the measurement instrument, but ambient temperature outside the instrument can be used) and the heater plate channel temperature and the passage of time. This model is continuously updated, and the results of the model are used to decide if the heating element is to be turned on or off, to maintain the cartridge temperature to approximately 35.3±0.5°C. In one embodiment, thermistors are utilized to measure the temperatures used in the thermal model to calculate the temperature of the cartridge. Although one embodiment has been described which utilizes software to control temperature, temperature control can also be performed in a similar manner utilizing hardware elements.

In accordance with the teachings of one embodiment, the location of the sample detector is made quite close to the sample itself (typically approximately 0.4 cm), in direct contrast to the prior art which utilized optical transmission means such as mirrors in order to locate the detector at a distance (typically 10 cm) carefully selected such that the speckle size from the sample would be approximately equal to the size of the detector in order to maximize signal. In accordance with this embodiment, the speckle size is much smaller than the size of the detector, providing significantly smaller signal levels (one embodiment signal levels are reduced by about a factor of about 200). Thus, in accordance with this embodiment, greater gain is provided by electronic circuitry and a lower noise light source is utilized.

All publications and patent applications cited in this specification are herein incorporated by reference as if each individual publication or patent application were specifically and individually indicated to be incorporated by reference.

Although the foregoing invention has been described in some detail by way of illustration and example for purposes of clarity of understanding, it will be readily apparent to those of ordinary skill in the art in light of the teachings of this invention that certain changes and modifications may be made thereto.

## Claims

1. A monitor customizing system, comprising:
an analytical instrument that provides a message to a user of said instrument,
detector means in said instrument for detecting the presence of an analyte present in or property of a sample,
an analytical cartridge comprising means for retaining a sample for analysis,
registration means in said analytical instrument for holding said analytical cartridge in registration with said detector means, and
a plurality of customizing cartridges, each of said customizing cartridges being of a predetermined class and comprising a cartridge capable of being held in said instrument by said registration means, wherein each class of customizing cartridge is encoded with a different signal and said analytical instrument comprises means for detecting said signal and means for customizing said instrument in response to said signal, wherein said means for customizing causes said instrument to provide said message in one of a plurality of predetermined formats in response to the signal provided by said class of customizing cartridge.

2. The system according to claim 1 wherein said customizing cartridge is said analytical cartridge.

3. The system according to claim 1 or claim 2 wherein said customizing cartridge is a control cartridge capable of interacting with said instrument to determine proper operation of the detector means of said instrument.

4. The system according to claim 1 wherein said customizing cartridge performs no function in said instrument other than said customizing.

5. The system according to any one of the preceding claims, wherein said signal is a bar code on said customizing cartridge.

6. The system according to any one of the preceding claims, wherein said signal is a plurality of locations on a transparent portion of said customizing cartridge that are either transparent or opaque.

7. The system according to any one of claims 1 to 3, wherein said signal is a magnetically encoded strip on said cartridge.

8. The system according to any one of claims 1 to 3, wherein said signal is one or more projections from or depressions in a surface of said cartridge.

9. The system according to any one of the preceding claims, wherein said means for customizing comprises a computer program and said signal provides an input for said computer program.

10. The system according to any one of claims 1 to 8, wherein said means for customizing comprises a switch activated by said customizing cartridge.

11. In an analytical system comprising an analytical instrument that provides a message to a user of said instrument, detector means in said instrument for detecting the presence of an analyte present in or property of a sample, an analytical cartridge comprising means for retaining a sample for analysis, and registration means in said analytical instrument for holding said analytical cartridge in registration with said detector means, an improvement that comprises:
a plurality of customizing cartridges, each of said customizing cartridges being of a predetermined class and comprising a cartridge capable of being held in said instrument by said registration means, wherein each class of customizing cartridge is encoded with a different signal, and
means for detecting said signal and means for customizing said instrument in response to said signal, both of said means being located in said instrument,
wherein said means for customizing causes said instrument to provide said message in one of a plurality of predetermined formats in response to the signal provided by each class of customizing cartridge.

12. A kit for customizing an analytical system, wherein said analytical system comprises an analytical instrument that provides a message to a user of said instrument, detector means in said instrument for detecting the presence of an analyte present in or property of a sample, an analytical cartridge comprising means for retaining a sample for analysis, registration means in said analytical instrument for holding said analytical cartridge in registration with said detector means, means for detecting a signal from a cartridge inserted in said registration means, and means for customizing said instrument in response to said signal, wherein said means for customizing causes said instrument to provide a message in one of a plurality of predetermined formats in response to the signal provided by said cartridge, comprising:
a plurality of customizing cartridges, each of said customizing cartridges being of a predetermined class and comprising a cartridge capable of being held in said instrument by said registration means, wherein each class of customizing cartridge is encoded with a different signal.

13. A method for customizing an analytical instrument for use by an individual user, comprising:
temporarily inserting a customizing cartridge into customizing cartridge registration means of an analytical instrument, wherein said customizing cartridge is one of a plurality of customizing cartridges, each of said customizing cartridges being of a predetermined class, wherein each class of customizing cartridge is encoded with a different signal, wherein said analytical instrument comprises:
(1) analytical cartridge registration means in said analytical instrument for holding an analytical cartridge in registration with said detector means, wherein said analytical cartridge comprises means for retaining a sample for analysis,
(2) detector means in said instrument for detecting the presence of an analyte present in or a property of a sample when a sample is present in an analytical cartridge retained in said analytical cartridge registration means,
(3) means for detecting said signal,
(4) means for customizing said instrument in response to said signal, wherein said means for customizing causes said instrument to provide a message to said user in one of a plurality of predetermined formats in response to the signal provided by said class of customizing cartridge.

14. The method of claim 13, wherein said customizing cartridge registration means and said analytical cartridge registration means comprise separate registration means and said analytical cartridge registration means is not capable of retaining said customizing cartridge.

15. The method of claim 13, wherein said customizing cartridge registration means and said analytical cartridge registration means are a single registration means capable of retaining both said customizing cartridge and said analytical cartridge.

16. A monitor customizing cartridge, wherein said customizing cartridge is one of a plurality of customizing cartridges, each of said customizing cartridges being of a predetermined class, wherein each class of customizing cartridge is encoded with a different signal, said customizing cartridge being configured to be insertable into registration means of an analytical instrument, wherein said analytical instrument comprises:

(1) detector means for detecting the presence of an analyte present in or property of a sample,

(2) registration means for holding an analytical cartridge in registration with said detector means, wherein said analytical cartridge comprises means for retaining a sample for analysis,

(3) means for detecting said signal,

(4) means for customizing said instrument in response to said signal, wherein said means for customizing causes said instrument to provide a message to said user in one of a plurality of predetermined formats in response to the signal provided by said class of customizing cartridge.

EP 0 395 384 A2

$V_T$

E

G

A

C

J

K

H

I

F

D

TIME

**FIG. I**

FIG. 2

EP 0 395 384 A2

**FIG. 3**

START

↓

WAIT FOR END OF CURRENT 2Oms INTERNAL

↓

V−S AMP=(SI63−V−S AMP) (0.0625)+V−S AMP   (SMOOTH)

↓

FLOAT−TICK=FLOAT−TICK − I   (UPDATE−FLOAT−THRESHOLD)

↓

FLOAT−TICK=0   N / Y

↓ Y

FLOAT−TICK=62

↓

① T−S AMP=(SAH−2−SEC −T−S AMP) (0.0I56)+T−S AMP   (TAU−80 OR TAU−20)

↓

② FLOAT−THRESHOLD=T−S AMP/2   (UPDATE−FLOAT−THRESHOLD) △

↓

V−S AMP< FLOAT−THRESHOLD   N / Y   (WAIT FOR MEASUREMENT)

↓ Y

③ MEASUREMENT COMPLETE □

EP 0 395 384 A2

HEATER CONTROL ALGORITHM

DO THIS ONCE EVERY 2 SECONDS

RT1=AMBIENT TEMPERATURE MEASUREMENT
RT2=HEATER PLATE TEMPERATURE MEASUREMENT
W-A-T = 46*RT1 + 197*RT2 + 12 * 82
  (STANDS FOR WEIGHTED-AVERAGE-TEMPERATURE)
CCT=26*(WAT-CCT)+CCT
  (STANDS FOR CALCULATED CARTRIDGE TEMPERATURE)

IS CALCULATED CARTRIDGE TEMPERATURE
LESS THAN DESIRED OPERATING TEMPERATURE?

NO

YES

TURN ON HEATER FOR X SECONDS,
WHERE X IS LESS THAN 2

DONE

FIG. 4